# EUROPÄISCHE PATENTSCHRIFT

(11) **EP 2 382 114 B1**
(45) Veröffentlichungstag und Bekanntmachung des Hinweises auf die Patenterteilung: **08.10.2014**
(21) Anmeldenummer: 10701511.7
(22) Anmeldetag: 25.01.2010
(51) Int. Cl.: B60R 22/18, G01L 5/10

(54) **GURTHALTEVORRICHTUNG**
BELT HOLDER DEVICE
AGENCEMENT DE FIXATION POUR CEINTURE

(30) Priorität: 28.01.2009 DE 102009007720
(43) Veröffentlichungstag der Anmeldung: 02.11.2011
(73) Patentinhaber: BAG Bizerba Automotive GmbH, 72336 Balingen (DE)
(72) Erfinder: METZGER, Frank, 72461 Albstadt (DE)
(74) Vertreter: Hoeger, Stellrecht & Partner Patentanwälte
(86) Internationale Anmeldenummer: PCT/EP2010/050767
(87) Internationale Veröffentlichungsnummer: WO 2010/086281

(56) Entgegenhaltungen:
- DE-A1- 10 050 551
- DE-A1- 10 322 700
- DE-A1-102006 038 594
- US-A1- 2001 042 981
- US-A1- 2004 231 436
- US-A1- 2004 245 761
- US-A1- 2006 197 520
- US-B2- 6 729 194
- US-B2- 7 222 545

## Beschreibung

Die Erfindung betrifft eine Gurthaltevorrichtung, umfassend ein Gehäuse mit einer ersten Fixierungseinrichtung, eine Platte mit einer zweiten Fixierungseinrichtung, welche in einer Verschiebungsrichtung verschieblich an dem Gehäuse gelagert ist, wobei die Gurthaltevorrichtung über eine der Fixierungseinrichtungen an einer Anwendung gehalten ist und an der anderen Fixierungseinrichtung ein Gurt gehalten ist, eine Geber-Sensor-Einrichtung, welche in dem Gehäuse angeordnet ist und mittels der die relative Position der Platte zu dem Gehäuse ermittelbar ist, und eine Federeinrichtung, über welche sich die Platte an dem Gehäuse abstützt und welche eine Rückstellkraft bereitstellt.

Aus der US 6,729,194 B2 ist eine Sitzgurtspannungs-Sensorvorrichtung bekannt, welche ein Gehäuse mit einem Innenraum aufweist. Es ist eine Ankerplatte vorgesehen, welche eine Ausnehmung aufweist, an welcher ein Magnet fixiert ist, wobei sich der Magnet mit der Ankerplatte bewegt und durch einen an dem Gehäuse montierten Schlitten zusätzlich geführt ist. Ein Magnetfeldsensor ist unterhalb des Schlittens an dem Gehäuse montiert, wobei der Schlitten den Sensor schützt.

Aus der US 7,222,545 B2 ist eine weitere Sitzgurtspannungs-Sensorvorrichtung bekannt.

Aus der DE 100 50 551 A1 ist eine Vorrichtung bekannt, welche Sitzgurtgewebe zum Zurückhalten eines Objekts in einem Fahrzeugsitz, einen dem Fahrzeugsitz zugeordneten Sensor zum Abfühlen eines abgefühlten Gewichts des Objekts in dem Fahrzeugsitz, einen Sitzgurtspannungssensor zum Abfühlen der Spannung in dem Sitzgurtgewebe und eine Steuerung zum Bestimmen eines berechneten Gewichts des Objekts als Funktion sowohl des abgefühlten Gewichts als auch der Spannung in dem Sitzgurtgewebe aufweist.

Aus der DE 103 22 700 A1 ist ein Gurtschlossgehäuse mit integrierter Kraftmessvorrichtung zur Messung einer an einem Gurtschloss wirkenden Gurtzugkraft bekannt, enthaltend einen bewegbaren Anker, der eine in einer Stirnwand des Gehäuses gebildete Öffnung durchragt und einen Anschlag aufweist, der die Bewegbarkeit des Ankers aus dem Gehäuse gegen eine zwischen dem Gehäuse und dem Anker wirkende elastische Abstützung begrenzt, und einen am Gehäuse angebrachten Sensor zur Erfassung der Position des bewegbaren Ankers.

Aus der US 2004/231436 A1 ist ein Sitzgurtspannungssensor bekannt, welcher eine Hauptplatte und ein Verschiebungselement aufweist, welches relativ zu der Hauptplatte gegen die Kraft einer Feder verschieblich ist. Ein Sensor stellt ein Ausgangssignal als Antwort auf die relative Bewegung bereit.

Aus der DE 10 2006 038 594 A1 ist eine Gurtkraft-Messeinrichtung mit einer Messfeder bekannt, deren Auslenkung ein Maß für die Gurtkraft ist, und mit einem Geber, der der Messfeder zugeordnet ist, und mit einem Sensorelement, das ebenfalls der Messfeder zugeordnet ist, wobei die Auslenkung der Messfeder eine Veränderung der Lage des Sensorelements relativ zum Geber bewirkt, die vom Sensorelement als Maß für die Gurtkraft erfasst wird.

Aus der US 2006/197520 A1 ist eine Sitzgurtspannungsensorvorrichtung bekannt, welche Magnete umfasst.

Der Erfindung liegt die Aufgabe zugrunde, eine Gurthaltevorrichtung der eingangs genannten Art bereitzustellen, welche auf einfache Weise aufgebaut ist.

Diese Aufgabe wird bei der eingangs genannten Gurthaltevorrichtung erfindungsgemäß dadurch gelöst, dass die Federeinrichtung durch eine Biegefedereinrichtung gebildet ist, dass der Geber in die Platte integriert ist, wobei der Geber in einer Ausnehmung der Platte angeordnet ist und die Platte eine Oberseite und eine Unterseite aufweist, wobei die Unterseite dem Sensor zugewandt ist und der Geber nicht über die Oberseite hinausragt, dass der Geber in der Ausnehmung ein Magnet ist und von einer magnetisch isolierenden Hülle umgeben ist, und dass die erste Fixierungseinrichtung eine Öffnung im Gehäuse umfasst, durch die ein Befestigungselement durchtauchbar ist, wobei die Platte eine korrespondierende Öffnung aufweist, die eine größere Länge in der Verschiebungsrichtung aufweist als die Öffnung im Gehäuse.

Eine Biegefedereinrichtung lässt sich mit geringen Abmessungen in einer Richtung parallel zur Verschiebungsrichtung ausbilden. Dadurch ist es möglich, die Biegefedereinrichtung auf einfache Weise in das Gehäuse zu integrieren. Beispielsweise ist es möglich, diese innerhalb einer Ausnehmung der Platte abzustützen oder an einem Stiftelement oder dergleichen, welches an der Platte angeordnet ist, abzustützen. Es ergibt sich dadurch ein einfacher Aufbau und eine einfache Montierbarkeit der Gurthaltevorrichtung bei der Herstellung.

Ferner ist es dadurch beispielsweise auch auf einfache Weise möglich, die Geber-Sensor-Einrichtung und insbesondere eine Sensoreinheit auszutauschen.

Die Geber-Sensor-Einrichtung lässt sich insbesondere dazu verwenden, die Gurtspannung über die relative Position der Platte zu dem Gehäuse zu ermitteln. Das entsprechende Signal kann beispielsweise durch eine übergeordnete Steuervorrichtung weiter verarbeitet werden.

Der Geber ist in die Platte integriert. Dadurch ergibt sich ein einfacher kompakter Aufbau unter Minimierung der Bauteile. Insbesondere muss dann kein separater Träger oder Schlitten für den Geber vorgesehen werden.

Dazu ist der Geber in einer Ausnehmung der Platte angeordnet und sitzt insbesondere mindestens teilweise in dieser Ausnehmung und vorteilhafterweise insbesondere vollständig in dieser Ausnehmung.

Der Geber in der Ausnehmung ist ein Magnet und von einer magnetisch isolierenden Hülle umgeben. Dadurch wird ein magnetischer Kurzschluss und damit eine Schwächung des Magnetfelds verhindert.

Die Platte weist eine Oberseite und eine Unterseite auf, wobei die Unterseite dem Sensor zugewandt ist und der Geber nicht über die Oberseite hinausragt. Dadurch ergibt sich ein einfacher kompakter Aufbau.

Die erste Fixierungseinrichtung umfasst eine Öffnung im Gehäuse, durch die ein Befestigungselement durchtauchbar ist, wobei die Platte eine korrespondierende Öffnung aufweist, die eine größere Länge in der Verschiebungsrichtung aufweist als die Öffnung im Gehäuse. Dadurch ist in einem gewissen Bereich eine Verschieblichkeit der Platte relativ zu dem Gehäuse ermöglicht. Wenn das Gehäuse beschädigt wird oder sogar vollständig zerstört wird, dann ist die Platte mit daran fixiertem Gurt immer noch an einer Anwendung gehalten.

Günstig ist es, wenn die Biegefedereinrichtung durch eine einzige Biegefeder oder durch ein einziges Biegefederpaket (aus einer Mehrzahl von übereinander gestapelten Biegefedern) gebildet ist. Dadurch ergibt sich ein einfacher und kompakter Aufbau.

Insbesondere weist die Biegefedereinrichtung eine Biegeachse auf, welche quer und insbesondere senkrecht zur Verschiebungsrichtung orientiert ist. Dadurch lässt sich auf einfache Weise eine Rückstellkraft für eine Verschiebungsbewegung der Platte an dem Gehäuse bereitstellen.

Aus dem gleichen Grund ist es vorteilhaft, wenn die Biegefedereinrichtung ihre größte Längenabmessung in einer Richtung quer zur Verschiebungsrichtung aufweist. Dadurch lässt sich die Federeinrichtung auf einfache Weise in das Gehäuse integrieren.

Ganz besonders vorteilhaft ist es, wenn die Biegefedereinrichtung einen Mittelbereich, einen ersten Flügel und einen zweiten Flügel aufweist, wobei der erste Flügel und der zweite Flügel jeweils an dem Mittelbereich angeordnet und gegenüber diesem elastisch biegbar sind. Die Gurthaltevorrichtung lässt sich dadurch einfach und kompakt aufbauen. Insbesondere lässt sich die Breite des Gehäuses quer zur Verschiebungsrichtung gerichtet halten.

Es ist ferner günstig, wenn der erste Flügel und der zweite Flügel symmetrisch zum Mittelbereich angeordnet und ausgebildet sind. Dadurch ist eine symmetrische Krafteinleitung möglich.

Günstig ist es, wenn sich die Biegefedereinrichtung über den Mittelbereich an einem der Elemente Gehäuse oder Platte abstützt und sich der erste Flügel und der zweite Flügel an dem anderen Element (entweder Platte oder Gehäuse) abstützt. Dadurch lässt sich auf einfache Weise die Biegefedereinrichtung montieren und die entsprechende Rückstellkraft bereitstellen.

Beispielsweise ist die Biegefedereinrichtung aus Metall hergestellt.

Es ist auch möglich, dass die Biegefedereinrichtung aus einem Kunststoffmaterial hergestellt ist, welches insbesondere faserverstärkt ist. In diesem Falle lässt sich die Biegefedereinrichtung auf einfache Weise in das Gehäuse integrieren, welches insbesondere ebenfalls aus einem Kunststoffmaterial hergestellt ist.

Beispielsweise ist das Gehäuse aus einem faserverstärkten Kunststoffmaterial hergestellt, wobei die Fasern entsprechend der Kraftbelastung angeordnet sind. Eine Biegefedereinrichtung aus faserverstärktem Kunststoffmaterial lässt sich dann auf einfache Weise integrieren. Es ist auch möglich, dass eine von dem Gehäuse getrennte Biegefedereinrichtung vorhanden ist, welche aus einem Kunststoffmaterial (faserverstärkt oder nicht faserverstärkt) hergestellt ist. Eine Biegefedereinrichtung, welche aus einem Kunststoffmaterial hergestellt ist, lässt sich in seiner Formgestalt optimieren. Beispielsweise kann die Biegefedereinrichtung ohne Kraftbelastung geradlinig ausgebildet sein oder gebogen.

Es kann dabei vorgesehen sein, dass die Biegefedereinrichtung an dem Gehäuse angeformt und insbesondere einstückig angeformt ist. Dadurch lässt sich die Anzahl der Bauteile weiter minimieren.

Es kann auch vorgesehen sein, dass an der Platte mindestens ein Stiftelement zur Abstützung der Biegefedereinrichtung angeordnet ist.

Bei einem weiteren Ausführungsbeispiel weist die Platte eine Ausnehmung auf, wobei sich die Biegefedereinrichtung an einer die Ausnehmung begrenzenden Wand abstützt. Es ergibt sich dadurch ein kompakter Aufbau, wobei sich die Höhenabmessungen des Gehäuses minimieren lassen.

Insbesondere weist das Gehäuse einen Steg oder eine Wand auf, an welchem oder welcher sich die Biegefedereinrichtung abstützt. Dadurch können auf einfache Weise eine oder mehrere Anlenkungsstellen für die Federeinrichtung bereitgestellt werden.

Bei einem Ausführungsbeispiel ist der Steg in eine Ausnehmung der Platte eingetaucht. Dadurch lassen sich die Höhenabmessungen des Gehäuses minimieren.

Es kann vorgesehen sein, dass das Gehäuse ein unteres Gehäuseteil und ein oberes Gehäuseteil aufweist. Insbesondere ist dann das eine Gehäuseteil auf das andere Gehäuseteil aufsetzbar. Dadurch ergibt sich ein einfacher und kompakter Aufbau.

Ganz besonders vorteilhaft ist es, wenn an dem unteren Gehäuseteil und/oder dem oberen Gehäuseteil Gleitschienen für die Platte angeformt sind und insbesondere einstückig angeformt sind. Solche Gleitschienen lassen sich auf einfache Weise integral mit der Herstellung des entsprechenden Gehäuseteils herstellen. Auf ihnen lasst sich dann die Platte gleitend führen, um eine Verschieblichkeit relativ zu dem Gehäuse zu realisieren.

Günstig ist es, wenn die Geber-Sensor-Einrichtung als Geber mindestens einen Magneten und als Sensor mindestens einen magnetfeldsensitiven Sensor aufweist. Dadurch lässt sich die relative Position der Platte zu dem Gehäuse berührungslos ermitteln und insbesondere lässt sich die Gurtspannung berührungslos ermitteln.

Insbesondere ist der mindestens eine Magnet ein Stabmagnet. Ein solcher Stabmagnet lässt sich auf einfache Weise fertigen und in die Platte integrieren.

Günstigerweise ist dabei die Abfolgerichtung von Nordpol und Südpol bei dem Stabmagneten mindestens näherungsweise parallel zur Verschiebungsrichtung. Dadurch ergibt sich eine optimierte Magnetfeldbe-aufschlagung eines magnetfeldsensitiven Sensors mit hoher Signalhöhe.

Der Geber kann dabei in die Ausnehmung beispielsweise eingeklebt oder eingepresst sein. Es ergibt sich dadurch eine einfache Herstellbarkeit.

Günstig ist es, wenn der Geber ein Magnet ist und eine zylindrische oder quaderförmige Gestalt aufweist. Er lässt sich dadurch auf einfache und kostengünstige Weise herstellen und in die Platte integrieren.

Ferner günstig ist es, wenn der Geber nicht über die Unterseite hinausragt. Dadurch lassen sich die Höhenabmessungen des Gehäuses minimieren. Der Geber sitzt zwischen Oberflächen (Oberseite und Unterseite) der Platte.

Es kann vorgesehen sein, dass das Befestigungselement, welches durch die Öffnung im Gehäuse durchtauchbar ist, einen ersten Bereich zur Positionierung in der Öffnung des Gehäuses und einen zweiten Bereich mit Gewinde aufweist, wobei der erste Bereich einen größeren Querschnitt aufweist als der zweite Bereich. Am Übergang vom ersten Bereich zum zweiten Bereich ist eine Anlagefläche für die Anwendung bereitgestellt, durch welche die Einschraubtiefe des Befestigungselements vorgegeben wird.

Die erfindungsgemäße Gurthaltevorrichtung weist insbesondere einen Gurthaltekörper auf, welcher aus der Platte mit integriertem Geber, dem Gehäuse mit einem unteren Gehäuseteil und einem oberen Gehäuseteil, an welchem der Sensor angeordnet ist, und der Biegefedereinrichtung besteht. Dadurch lässt sich die Anzahl der Bauteile minimieren.

Die nachfolgende Beschreibung bevorzugter Ausführungsformen dient im Zusammenhang mit den Zeichnungen der näheren Erläuterung der Erfindung. Es zeigen:
- Figur 1: eine schematisch Darstellung eines Sitzes eines Kraftfahrzeugs, an welchem ein Ausführungsbeispiel einer Gurthaltevorrichtung angeordnet ist;

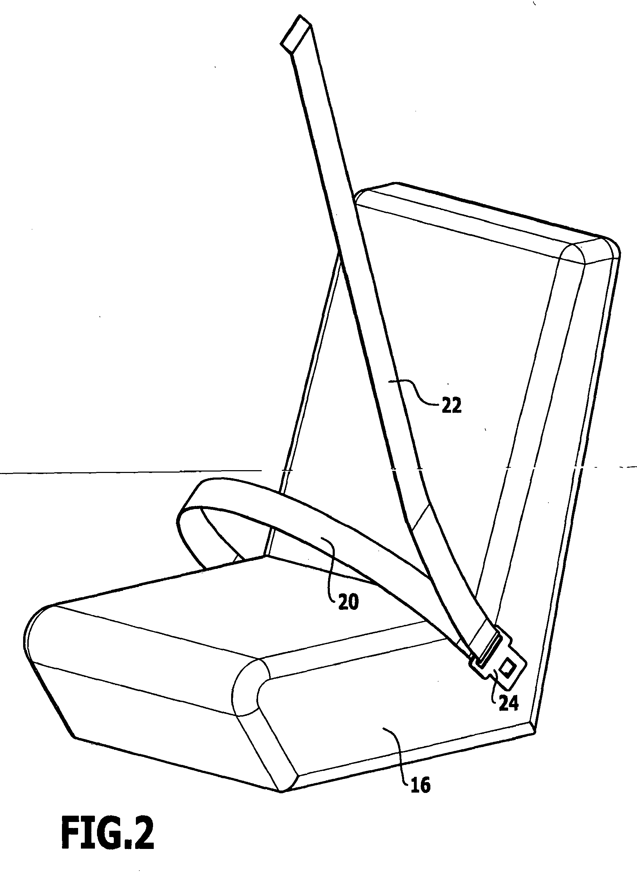

- Figur 2: den Sitz gemäß Figur 1 in einer anderen Ansicht;
- Figur 3: eine vergrößerte Darstellung des Bereichs A gemäß Figur 1;
- Figur 4: eine Schnittansicht längs der Linie 4-4 gemäß Figur 3;
- Figur 5: eine Schnittansicht längs der Linie 5-5 gemäß Figur 3;
- Figur 6: eine Explosionsdarstellung der Gurthaltevorrichtung gemäß Figur 3;
- Figur 7: eine weitere Explosionsdarstellung der Gurthaltevorrichtung gemäß Figur 3;
- Figur 8: ein weiteres Ausführungsbeispiel einer erfindungsgemäßen Gurthaltevorrichtung in Explosionsdarstellung; und
- Figur 9: ein weiteres Ausführungsbeispiel einer erfindungsgemäßen Gurthaltevorrichtung in Explosionsdarstellung.

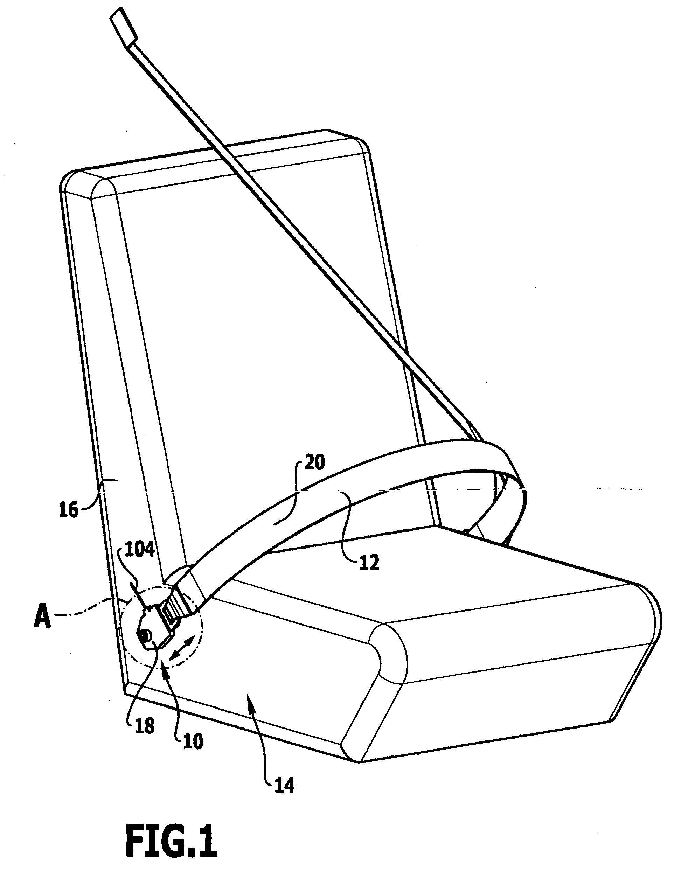

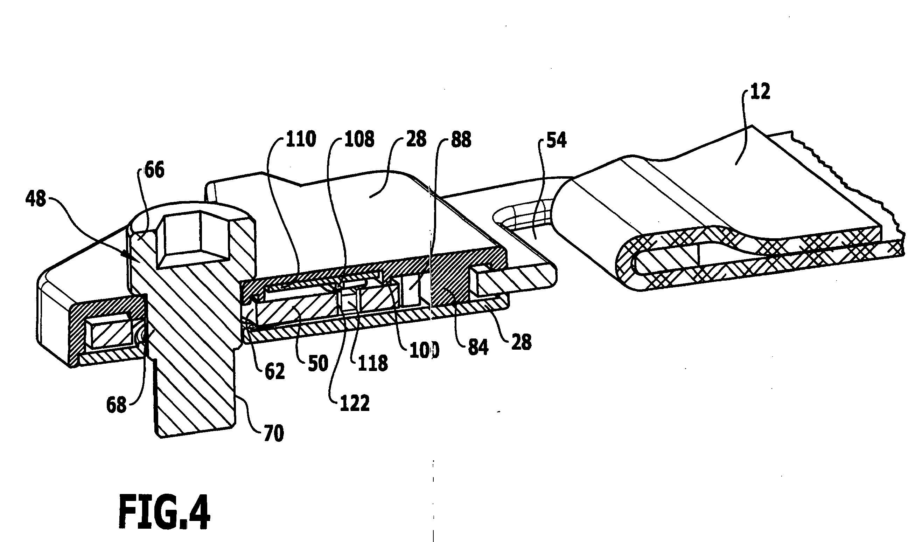

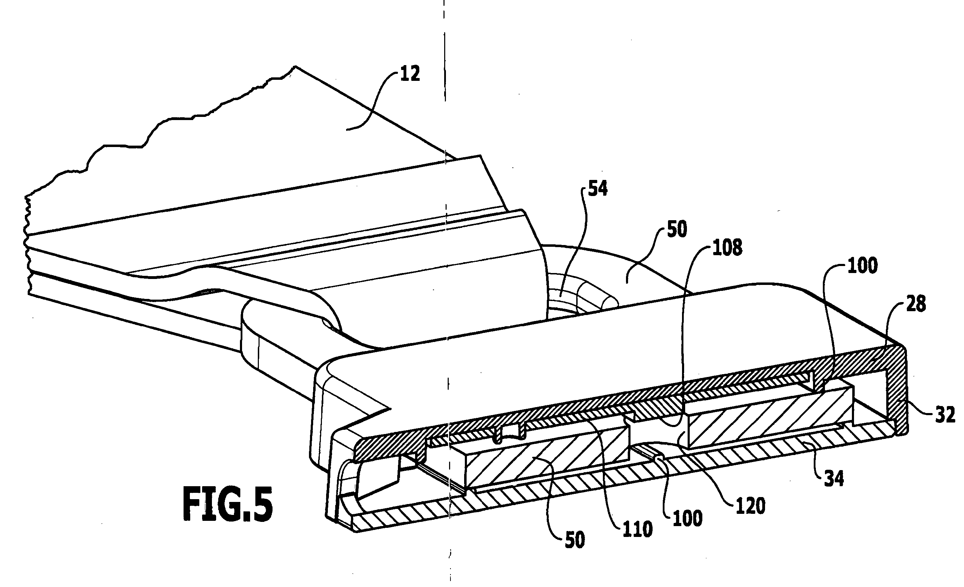

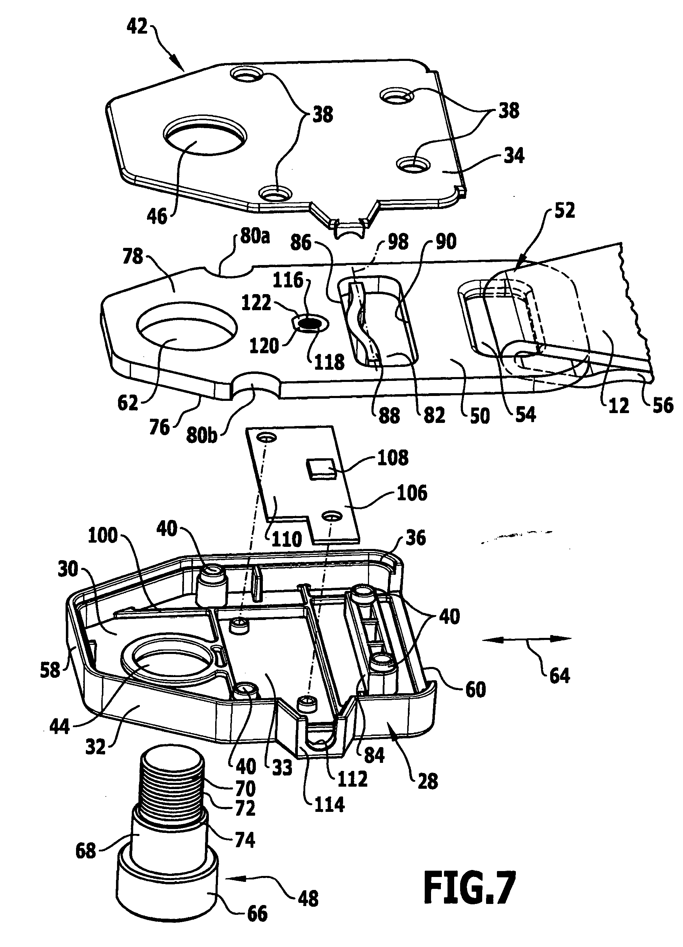

Ein Ausführungsbeispiel einer erfindungsgemäßen Gurthaltevorrichtung, welche in den Figuren 1 und 3 bis 7 gezeigt und dort mit 10 bezeichnet ist, dient zum Halten eines Gurts 12 und insbesondere eines Sicherheitsgurts an einer Anwendung 14. Die Anwendung 14 ist beispielsweise ein Sitz 16 eines Fahrzeugs. Die Gurthaltevorrichtung 10 kann dabei an dem Sitz 16 fixiert sein oder beispielsweise an einem Boden des Fahrzeugs (in den Zeichnungen nicht gezeigt).

Die Gurthaltevorrichtung 10 umfasst einen Gurthaltekörper 18. An dem Gurthaltekörper 18 ist ein Gurtbereich 20 fest fixiert. Der Gurtbereich 20 ist beispielsweise der Beckengurt. Der Gurtbereich 20 ist mit einem weiteren Gurtbereich 22 verbunden, welcher beispielsweise der Schultergurt ist. Dieser Schultergurt ist beispielsweise über eine entsprechende Vorrichtung an der B-Säule des Fahrzeugs fixiert.

Am Übergangsbereich zwischen dem Gurtbereich 20 und dem Gurtbereich 22 ist frei verschieblich eine Steckzunge 24 positioniert. Bei in einem entsprechenden Gurtschloss fixierter Steckzungen 24 ist der Gurt 12 an der Anwendung 14 über drei Punkte fixiert (Dreipunktgurt), nämlich über die Gurthaltevorrichtung 10 an der Anwendung, über die Steckzunge 24 im Gurtschloss und an der B-Säule.

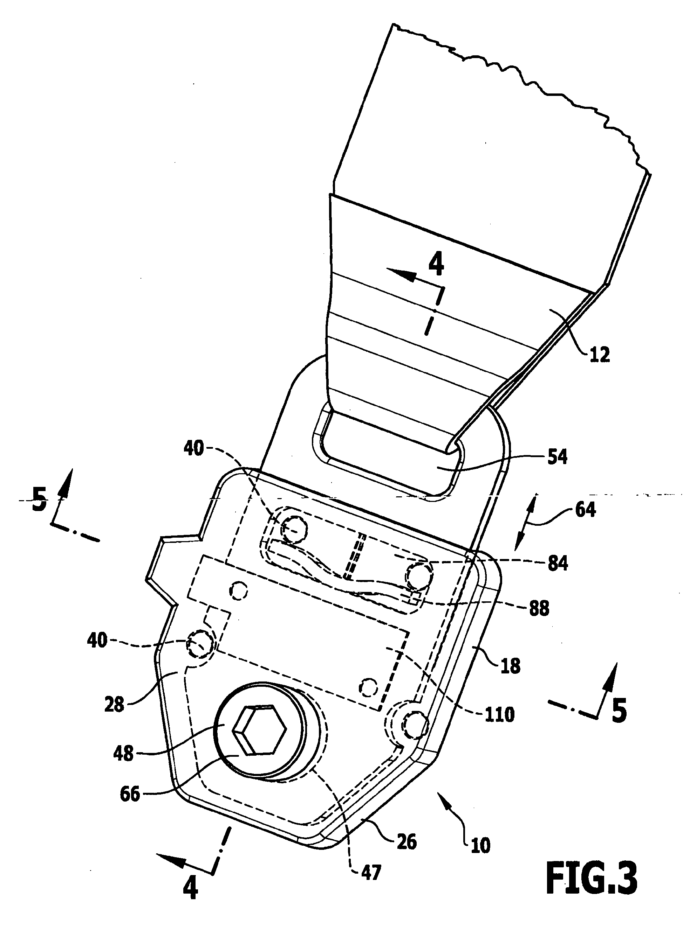

Der Gurthaltekörper 18 weist ein Gehäuse 26 auf (Figuren 3 bis 7). Das Gehäuse 26 ist insbesondere aus einem Kunststoffmaterial hergestellt. Das Gehäuse 26 umfasst einen unteren Gehäuseteil 28, welcher beispielsweise wannenförmig ausgebildet ist. Der untere Gehäuseteil 28 hat einen Boden 30, an welchem randseitig eine umlaufende, über den Boden 30 hinausragende Wand 32 sitzt. Der Boden 30 und die Wand 32 sind insbesondere einstückig gebildet. Zwischen dem Boden 30 und der Wand 32 ist ein Innenraum 33 gebildet.

Das Gehäuse 26 umfasst ferner einen oberen Gehäuseteil 34, welcher auf den unteren Gehäuseteil 28 aufgesetzt ist. Die Wand 32 ist dazu abgestuft ausgebildet mit einer Auflagefläche 36 für den oberen Gehäusedeckel 34. Der obere Gehäusedeckel 34 ist entsprechend an den Verlauf der Wand 32 angepasst.

Der obere Gehäuseteil 34 weist durchgehende Öffnungen 38 auf. Diese sind ausgerichtet auf an dem unteren Gehäuseteil 28 sitzende und insbesondere einstückig an dem unteren Gehäuseteil 28 ausgebildete Hülsen 40. Durch Schrauben oder dergleichen ist der obere Gehäuseteil 34 mit dem unteren Gehäuseteil 28 fixierbar, wobei die Schrauben oder dergleichen in die Hülsen 40 eingreifen und Schraubenköpfe oder dergleichen auf das obere Gehäuseteil 34 in der Umgebung der Öffnungen 38 aufsitzen.

Das Gehäuse 26 weist eine erste Fixierungseinrichtung 42 auf, über welche die Gurthaltevorrichtung 10 durch das Gehäuse 26 an der Anwendung 14 fixierbar ist. Die erste Fixierungseinrichtung 42 umfasst dabei eine erste durchgehende Ausnehmung 44 in dem unteren Gehäuseteil 28 und eine dazu korrespondierende zweite durchgehende Ausnehmung 46 in dem oberen Gehäuseteil 34.

Die erste Ausnehmung 44 und die zweite Ausnehmung 46 sind fluchtend zueinander ausgerichtet und bilden gemeinsam eine durchgehende Öffnung 47 im Gehäuse 26. Durch die erste Ausnehmung 44 und die zweite Ausnehmung 46 ist ein Befestigungselement 48 durchtauchbar.

An dem Gehäuse 26 ist eine Platte 50 verschieblich gelagert. Die Platte 50 ist insbesondere aus einem metallischen Material hergestellt.

Die Platte 50 umfasst eine zweite Fixierungseinrichtung 52, an welcher der Gurt 12 fixiert ist. Die Fixierungseinrichtung 52 ist insbesondere durch eine durchgehende Ausnehmung 54 in der Platte 50 gebildet. Durch die Ausnehmung 54 ist der Gurt 12 durchgeschleift, wobei zum Halten des Gurts 12 in der Ausnehmung 54 der Gurt 12 in einem Bereich 56 in der Nähe seines freien Endes mit einem darüberliegenden Bereich verbunden ist. Beispielsweise erfolgt die Verbindung über Vernähen oder Verkleben.

Das Gehäuse 26 weist ein erstes Ende 58 und ein gegenüberliegendes zweites Ende 60 auf. An dem ersten Ende 58 ist das Gehäuse 26 über die Wand 32 geschlossen. An dem zweiten Ende 60 ist das Gehäuse 26 offen und die Platte 50 taucht über das zweite Ende 60 aus dem Gehäuse 26 aus, sodass die Ausnehmung 54 und damit der fixierte Gurt 12 außerhalb des Innenraums 33 des Gehäuses 26 liegen. Der restliche Teil der Platte 50 liegt im Innenraum 33.

Die Platte 50 hat eine durchgehende Ausnehmung 62, welche innerhalb des Gehäuses 26 positioniert ist und mit der ersten Ausnehmung 44 und der zweiten Ausnehmung 46 mit dem Gehäuse 26 korrespondiert. Das Befestigungselement 48 ist durch die Ausnehmung 62 durchgetaucht. Die Ausnehmung 62 weist dabei eine größere Länge in einer Richtung 64 zwischen dem ersten Ende 58 und dem zweiten Ende 60 des Gehäuses 26 auf als die erste Ausnehmung 44 und die zweite Ausnehmung 46 im Gehäuse 26. Die Richtung 64 ist eine Verschiebungsrichtung der Platte 50 an dem Gehäuse 26.

Bei fixierter Gurthaltevorrichtung 10 ist das Befestigungselement 48 auch durch die Ausnehmung 62 durchgetaucht. Die größere Länge der Ausnehmung 62 in der Richtung 64 erlaubt die relative Verschieblichkeit der Platte 50 zu dem Gehäuse 26 auch bei durchgetauchtem Befestigungselement 48 (innerhalb einer bestimmten Verschiebungsstrecke).

Das Befestigungselement 48 hält auch die Platte 50. Dies ist vorteilhaft im Schadensfall, wenn beispielsweise das Gehäuse 26 beschädigt ist. Durch das Befestigungselement 48 wird der Gurt 12 dann auch bei Beschädigung oder sogar vollständig zerstörtem Gehäuse 26 durch die Platte 50 an der Anwendung 14 gehalten.

Das Befestigungselement 48 umfasst einen Kopf 66, einen sich daran anschließenden ersten Bereich 68 und einen auf den ersten Bereich 68 folgenden zweiten Bereich 70 mit einem Außengewinde 72. Der erste Bereich 68 ist insbesondere gewindefrei ausgebildet.

Der Kopf 66 weist einen größeren Durchmesser als der erste Bereich 68 auf. Der erste Bereich 68 dient zum Durchtauchen der Öffnung 47. Der Kopf 66 ist auf eine Außenseite des Gehäuses 26 und insbesondere des unteren Gehauseteils 28 anlegbar. Über das Außengewinde 72 des zweiten Bereichs 70 ist das Befestigungselement 48 an der Anwendung 14 verschraubbar. Der zweite Bereich 70 weist dabei einen geringen Querschnitt als der erste Bereich 68 auf. Dadurch ist an dem ersten Bereich 68 am Übergang zum zweiten Bereich 70 eine Anlagefläche 74 gebildet, welche insbesondere ringförmig ist. Über diese Anlagefläche 74 ist das Befestigungselement 48 an die Anwendung 14 anlegbar. Dadurch lässt sich die Schraubtiefe des Befestigungselements 48 an der Anwendung 14 einstellen.

Wenn der erste Bereich 68 in die Öffnung 47 eingetaucht ist, dann ist er auch durch die Ausnehmung 62 der Platte 50 durchgetaucht, wobei, wie oben erwähnt, deren Verschieblichkeit ermöglicht ist.

Die Platte 50 ist flach ausgebildet. Sie erstreckt sich zwischen einer Unterseite 76, welche dem Boden 30 zugewandt ist, und einer Oberseite 78, welche dem oberen Gehäuseteil 34 zugewandt ist. Die Unterseite 76 und die Oberseite 78 sind insbesondere parallel zueinander. Vorzugsweise ist der Abstand zwischen der Unterseite 76 und der Oberseite 78 über die gesamte Länge der Platte 50 gleich.

Die Platte 50 weist gegenüberliegende seitliche Ausbuchtungen 80a, 80b auf, welche an den entsprechenden Hülsen 40 angepasst sind, damit die Verschieblichkeit auf der Verschiebungsstrecke durch Anstoß an Hülsen 40 nicht behindert wird.

Die Platte 50 weist zwischen der Ausnehmung 62 und der Ausnehmung 54 eine weitere durchgehende Ausnehmung 82 auf. An dem unteren Gehäuseteil 28 sitzt in der Nähe des zweiten Endes 60 insbesondere einstückig ein Steg 84 und dieser Steg 84 weist insbesondere Hülsen 40 auf. Dieser Steg 84 ist durch die Ausnehmung 82 durchgetaucht und damit in der Ausnehmung 82 der Platte 50 mit einem Teilbereich positioniert. Der Steg 84 ist dabei an dem Boden 30 fixiert und ragt über diesen in den Innenraum 33. Die Ausnehmung 82 ist in Richtung der Ausnehmung 62 durch eine Wand 86 begrenzt. Zwischen der Wand 86 und dem Steg 84 sitzt in der Ausnehmung 82 eine Biegefedereinrichtung 88. Die Biegefedereinrichtung 88 ist an der Wand 86 und dem Steg 84 abgestützt. Die Biegefedereinrichtung 88 stellt eine Rückstellkraft bereit.

Wenn die Platte 50 beispielsweise durch Kraftwirkung auf den Gurt 12 weiter aus dem Gehäuse 26 herausgezogen wird, dann wird vermittelt durch den Steg 84 die Biegefedereinrichtung 88 elastisch zusammengedrückt. Wenn die Kraft auf den Gurt 12 nicht mehr wirkt, dann bewirkt die Biegefedereinrichtung 88 aufgrund der entsprechenden Rückstellkraft eine Rückbewegung der Platte 50 bis die Platte 50 an dem Gehäuse 26 oder einem Gehäuseteil anliegt. Beispielsweise wird ein entsprechendes Anliegen durch Anliegen des Stegs 84 an einer der Wand 86 gegenüberliegenden Wand 90 der Ausnehmung 82 bewirkt.

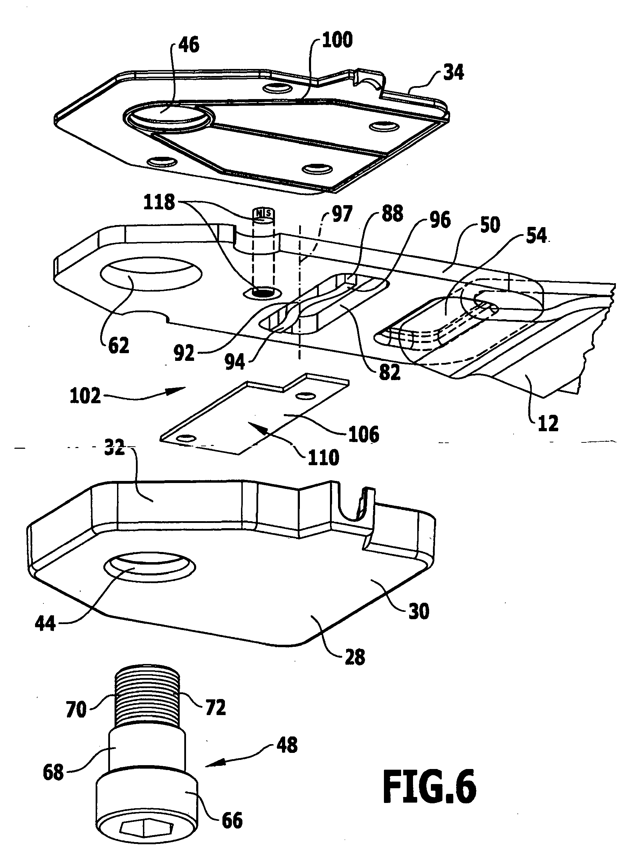

Die Biegefedereinrichtung 88 ist vorzugsweise durch eine einzige Biegefeder oder durch ein einziges Biegefederpaket gebildet. Die Biegefedereinrichtung 88 weist einen Mittelbereich 92 auf, an welchem ein erster Flügel 94 und ein zweiter Flügel 96 sitzen und insbesondere einstückig sitzen. Der erste Flügel 94 erstreckt sich quer zu der Richtung 64 auf die eine Seite und der zweite Flügel 96 auf die andere Seite. Der erste Flügel 94 und der zweite Flügel 96 sind elastisch an dem Mittelbereich 92 gehalten. Eine Biegeachse 97 (Figur 6) für die elastische Biegbarkeit jeweils des ersten Flügels 94 und des zweiten Flügels 96 zu dem Mittelbereich 92 liegt quer und insbesondere senkrecht zu der Richtung 64.

Die Biegefedereinrichtung 88 ist bezogen auf ihren Mittelbereich 92 symmetrisch ausgebildet, das heißt der erste Flügel 94 und der zweite Flügel 96 sind symmetrisch angeordnet und ausgebildet.

Die Biegefedereinrichtung 88 kann bezüglich des ersten Flügels 94 und des zweiten Flügels 96 gebogen ausgebildet sein, wie beispielsweise in der Figur 3 gezeigt. Es ist grundsätzlich auch möglich, dass (insbesondere ohne Kraftbeaufschlagung) die Biegefedereinrichtung 88 geradlinig ausgebildet ist.

Die Biegefedereinrichtung 88 stützt sich über den Mittelbereich 92 an der Wand 86 ab. Der erste Flügel 94 und der zweite Flügel 96 stützen sich an dem Steg 84 ab, wobei eine Stützstelle des ersten Flügels 94 und eine Stützstelle des zweiten Flügels 96 in einer Richtung 98 quer zur Richtung 94 beabstandet zueinander sind und in dieser Richtung 98 auch beabstandet zu einer Stützstelle des Mittelbereichs 92 sind.

Die Biegefedereinrichtung 88 weist ihre größte Längenerstreckung in der Richtung 98 senkrecht zur Richtung 64 auf. Die Längenerstreckung der Biegefedereinrichtung 88 in der Richtung 64 ist erheblich kleiner als die Erstreckung in der Richtung 98.

Die Biegefedereinrichtung 88 ist aus einem metallischen Material hergestellt. Sie kann auch aus einem Kunststoffmaterial und insbesondere faserverstärktem Kunststoffmaterial hergestellt sein.

Beispielsweise ist es auch möglich, dass die Biegefedereinrichtung 88 aus einem Polymerelastomer hergestellt ist.

An dem unteren Gehäuseteil 28 und dem oberen Gehäuseteil 34 sind jeweils Gleitschienen 100 angeordnet, an welchen die Platte 50 gleitverschieblich gelagert ist. Die Gleitschienen 100 sind insbesondere einstückig an dem entsprechenden Gehäuseteil 28 bzw. 34 angeformt.

Es ist dabei möglich, dass die Gleitschienen 100 als Verstärkungsrippen für das entsprechende Gehäuseteil ausgebildet sind.

Die Gurthaltevorrichtung 10 umfasst eine als Ganzes mit 102 bezeichnete Geber-Sensor-Einrichtung, über welche sich die relative Position der Platte 50 zu dem Gehäuse 26 feststellen lässt und ein entsprechendes Signal beispielsweise an eine übergeordnete Steuereinrichtung abgebbar ist. Dies ist in Figur 1 durch eine teitung 104 angedeutet. Das Signal charakterisiert die Gurtspannung.

Die Geber-Sensor-Einrichtung 102 umfasst eine Sensoreinheit 106 mit (mindestens) einem Sensor 108. Vorzugsweise umfasst die Sensoreinheit 106 mindestens eine Platine 110, auf der der Sensor 108 sitzt. Die Platine 110 ist an dem unteren Gehäuseteil 28 beispielsweise über Schrauben fixiert. Sie ist dabei zwischen der Ausnehmung 44 und dem Steg 84 positioniert. Der Sensor 108 liegt dabei an einer Mittelebene des Gurthaltekörpers 18.

Das Gehäuse 26 weist seitlich eine Ausnehmung 112 auf, welche beispielsweise an einem Stutzen 114 angeordnet ist. Die Platine 110 ist teilweise an dem Stutzen 114 angeordnet. Über die Ausnehmung 112 lässt sich ein Stecker anschließen oder es wird ein Kabel über die Leitung 104 abgeführt, über welche das entsprechende Sensorsignal an eine Steuereinrichtung oder dergleichen abführbar ist. Der Stutzen 114 nimmt einen Anschluss an der Platine 110 auf.

Als Geber 116 ist insbesondere ein Magnet 118 und vorzugsweise ein Permanentmagnet vorgesehen.

Dieser Magnet 118 sitzt in einer Ausnehmung 120, welche zwischen der Ausnehmung 62 und der Ausnehmung 82 liegt. Der Magnet 118 ist dabei von einer magnetisch isolierenden Hülle 122 beispielsweise in Form einer Hülse umgeben. Der Magnet 118 ist beispielsweise in die Ausnehmung 120 eingeklebt oder eingepresst.

Der Magnet 118 liegt wie der Sensor 108 in einer Mittelebene des Gurthaltekörpers 18 und ist auf den Sensor 108 ausgerichtet. Der Sensor 108 ist dabei entsprechend magnetfeldsensitiv. Beispielsweise ist der Sensor 108 ein Hall-Sensor.

Der Geber 116 ist in die Platte 50 integriert.

Der Magnet 118 ist vorzugsweise ein Stabmagnet und beispielsweise zylindrisch oder quaderförmig ausgebildet. Er ragt nicht über die Oberseite 78 der Platte 50 hinaus. Er ist entweder bündig mit dieser Oberseite 78 angeordnet oder versenkt angeordnet. Es ist in diesem Zusammenhang beispielsweise möglich, dass die Ausnehmung 120 sacklochartig ausgebildet ist mit der Öffnungsseite von der Unterseite 76 her.

Grundsätzlich ist es möglich, dass der Magnet 118 über die Unterseite 76 in Richtung des Bodens 30 ragt. Vorteilhafterweise ist es jedoch vorgesehen, dass er nicht über diese Unterseite 76 hinausragt und beispielsweise bündig mit dieser oder versenkt gegenüber dieser angeordnet ist.

Bei der Ausbildung des Magneten 118 als Stabmagnet folgen Nordpol und Südpol in einer Abfolgerichtung aufeinander. Diese Abfolgerichtung ist parallel zur Verschiebungsrichtung 64 (siehe Figur 6).

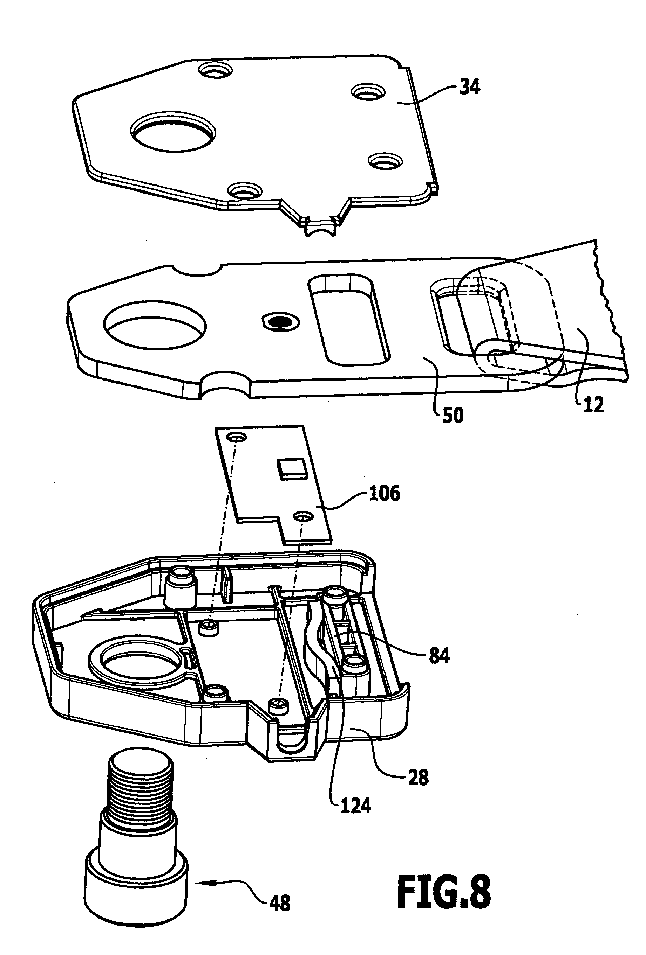

Bei einem weiteren Ausführungsbeispiel, welches schematisch in Figur 8 gezeigt ist, ist eine Biegefedereinrichtung 124 vorgesehen, welche kein von dem Gehäuse 26 separates Element ist, sondern welches an das Gehäuse 26 und insbesondere dem Steg 84 angeformt ist. In diesem Fall ist die Biegefedereinrichtung 124 aus einem Kunststoffmaterial und insbesondere faserverstärkten Kunststoffmaterial hergestellt, wobei an den Abstützungsstellen mit dem Steg 48 eine Verbindung mit dem Steg 48 vorliegt. Diese Verbindung ist dabei vorzugsweise einstückig und insbesondere stoffschlüssig.

Ansonsten ist die Gurthaltevorrichtung wie oben im Zusammenhang mit der Gurthaltevorrichtung 10 beschrieben aufgebaut.

Die Gurthaltevorrichtung 10 ist mit einer minimierten Anzahl von Bauteilen aufgebaut. Der Geber 116 (Magnet 118) ist ohne weiteren Magnetträger oder dergleichen in die Platte 50 integriert.

Durch das Vorsehen der Biegefedereinrichtung 88 bzw. 124, welche in der Ausnehmung 82 abgestützt ist, erhält man einen sehr kompakten Aufbau bei einfacher Montierbarkeit der Gurthaltevorrichtung 10. Die Gurthaltevorrichtung 10 lässt sich mit geringen Längenabmessungen und Höhenabmessungen realisieren.

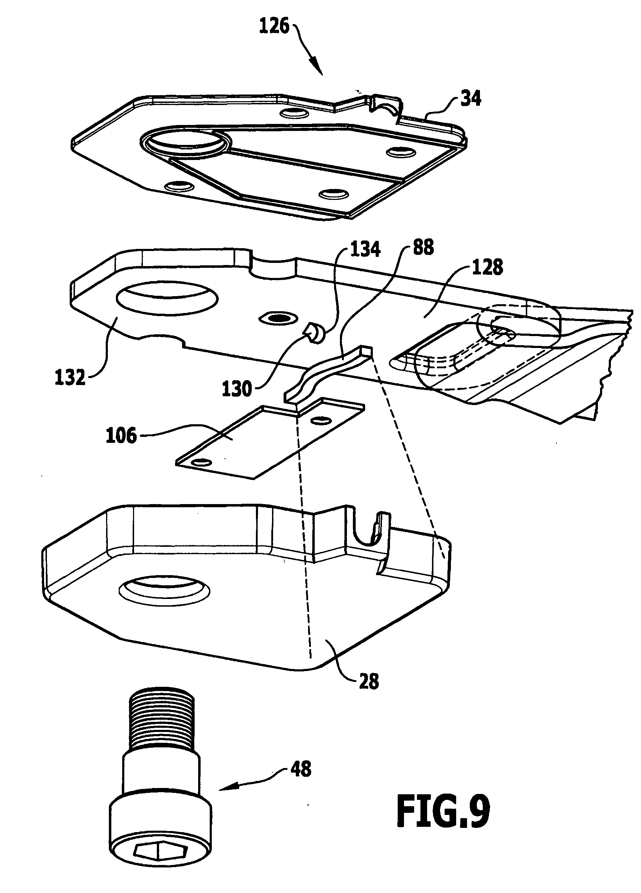

Bei einem weiteren Ausführungsbeispiel, welches in Figur 9 gezeigt und mit 126 bezeichnet ist, ist eine Platte 128 vorgesehen, welche anstatt der Ausnehmung 82 zur Abstützung der Biegefedereinrichtung 88 einen Stift 130 aufweist, welcher über eine Unterseite 132 der Platte 128, welche dem unteren Gehäuseteil 28 zugewandt ist, hinausragt und eine entsprechende Anlagefläche 134 für die Biegefedereinrichtung bereitstellt.

Der untere Gehäuseteil 28 weist entsprechend einen Steg auf (in Figur 9 nicht gezeigt), an dem sich die Biegefedereinrichtung 88 abstützen kann, wobei in diesem Falle der Steg auch eine Führungsfläche (Gleitfläche) für die Platte 128 bereitstellen kann.

Der Stift 130 ist insbesondere einstückig an der Platte 128 angeformt.

Im Übrigen funktioniert die Gurthaltevorrichtung 126 wie oben beschrieben.

Die Geber-Sensor-Einrichtung 102 funktioniert bei der erfindungsgemäßen Gurthaltevorrichtung berührungslos, das heißt die relative Position des Gebers 116 zu dem Sensor 108 und damit die relative Position der Platte 50 bzw. 128 an dem Gehäuse 26 lässt sich ohne Kontakt zwischen Geber 116 und Sensor 108 ermitteln.

Die entsprechenden Daten können beispielsweise im Zusammenhang mit einer Airbag-Steuerung verwendet werden.

## Patentansprüche

1. Gurthaltevorrichtung, umfassend ein Gehäuse (26) mit einer ersten Fixierungseinrichtung (42), eine Platte (50; 128) mit einer zweiten Fixierungseinrichtung (52), welche in einer Verschiebungsrichtung (64) verschieblich an dem Gehäuse (26) gelagert ist, wobei die Gurthaltevorrichtung über eine der Fixierungseinrichtungen (42; 52) an einer Anwendung (14) gehalten ist und an der anderen Fixierungseinrichtung (42; 52) ein Gurt (12) gehalten ist, eine Geber-Sensor-Einrichtung (102), welche in dem Gehäuse (26) angeordnet ist und mittels der die relative Position der Platte (50; 128) zu dem Gehäuse (26) ermittelbar ist, und eine Federeinrichtung, über welche sich die Platte (50; 128) an dem Gehäuse (26) abstützt und welche eine Rückstellkraft bereitstellt, **dadurch gekennzeichnet, dass** die Federeinrichtung durch eine Biegefedereinrichtung (88; 124) gebildet ist, dass der Geber (116) in die Platte (50; 128) integriert ist, wobei der Geber (116) in einer Ausnehmung (120) der Platte (50; 128) angeordnet ist und die Platte (50; 128) eine Oberseite (78) und eine Unterseite (76) aufweist, wobei die Unterseite (76) dem Sensor (108) zugewandt ist und der Geber (116) nicht über die Oberseite (78) hinausragt, dass der Geber (116) in der Ausnehmung (120) ein Magnet (118) ist und von einer magnetisch isolierenden Hülle (122) umgeben ist, und dass die erste Fixierungseinrichtung (42) eine Öffnung (47) im Gehäuse (26) umfasst, durch die ein Befestigungselement (48) durchtauchbar ist, wobei die Platte (50; 128) eine korrespondierende Öffnung (62) aufweist, die eine größere Länge in der Verschiebungsrichtung (64) aufweist als die Öffnung (47) im Gehäuse (26).

2. Gurthaltevorrichtung nach Anspruch 1, **dadurch gekennzeichnet, dass** die Biegefedereinrichtung (88; 124) einen Mittelbereich (92), einen ersten Flügel (94) und einen zweiten Flügel (96) aufweist, wobei der erste Flügel (94) und der zweite Flügel (96) jeweils an dem Mittelbereich (92) angeordnet sind und gegenüber diesem elastisch biegbar sind.

3. Gurthaltevorrichtung nach Anspruch 1 oder 2, **dadurch gekennzeichnet, dass** die Biegefedereinrichtung (88; 124) sich über den Mittelbereich (92) an einem der Elemente Gehäuse (26) oder Platte (50; 128) abstützt und sich der erste Flügel (94) und der zweite Flügel (96) an dem anderen Element (128; 50; 26) abstützen.

4. Gurthaltevorrichtung nach einem der vorangehenden Ansprüche, **dadurch gekennzeichnet, dass** die Biegefedereinrichtung (124) aus einem Kunststoffmaterial hergestellt ist, welches insbesondere faserverstärkt ist.

5. Gurthaltevorrichtung nach Anspruch 4, **dadurch gekennzeichnet, dass** die Biegefedereinrichtung (124) an dem Gehäuse (26) angeformt und insbesondere einstückig angeformt ist.

6. Gurthaltevorrichtung nach einem der vorangehenden Ansprüche, **dadurch gekennzeichnet, dass** an der Platte (128) mindestens ein Stiftelement (130) zur Abstützung der Biegefedereinrichtung (88) angeordnet ist.

7. Gurthaltevorrichtung nach einem der Ansprüche 1 bis 5, **dadurch gekennzeichnet, dass** die Platte (50) eine Ausnehmung (82) aufweist, wobei sich die Biegefedereinrichtung (88; 124) an einer die Ausnehmung (82) begrenzenden Wand (86) abstützt.

8. Gurthaltevorrichtung nach einem der vorangehenden Ansprüche, **dadurch gekennzeichnet, dass** das Gehäuse (26) einen Steg (84) oder eine Wand aufweist, an welchem oder welcher sich die Biegefedereinrichtung (88; 124) abstützt.

9. Gurthaltevorrichtung nach Anspruch 8, **dadurch gekennzeichnet, dass** der Steg (84) in eine Ausnehmung (82) der Platte (50) eingetaucht ist.

10. Gurthaltevorrichtung nach einem der vorangehenden Ansprüche, **dadurch gekennzeichnet, dass** das Gehäuse (26) einen unteren Gehäuseteil (28) und einen oberen Gehäuseteil (34) aufweist.

11. Gurthaltevorrichtung nach Anspruch 10, **dadurch gekennzeichnet, dass** an dem unteren Gehäuseteil (28) und/oder dem oberen Gehäuseteil (34) Gleitschienen (100) für die Platte (50; 128) angeformt sind und insbesondere einstückig angeformt sind.

12. Gurthaltevorrichtung nach einem der vorangehenden Ansprüche, **dadurch gekennzeichnet, dass** der Geber (116) ein Magnet (118) ist und eine zylindrische oder quaderförmige Gestalt aufweist.

13. Gurthaltevorrichtung nach einem der vorangehenden Ansprüche, **dadurch gekennzeichnet, dass** der Geber (116) nicht über die Unterseite (76) hinausragt.

14. Gurthaltevorrichtung nach einem der vorangehenden Ansprüche, **dadurch gekennzeichnet, dass** das Befestigungselement (48), welches durch die Öffnung (47) im Gehäuse (26) durchtauchbar ist, einen ersten Bereich (68) zur Positionierung in der Öffnung (47) des Gehäuses (26) und einen zweiten Bereich (70) mit einem Gewinde (72) aufweist, wobei der erste Bereich (68) einen größeren Querschnitt aufweist als der zweite Bereich (70).

## Claims

1. Belt holder device comprising a housing (26) having a first fixing device (42), a plate (50; 128) having a second fixing device (52) and being mounted on the housing (26) for displacement in a displacement direction (64), wherein the belt holder device is held on an application (14) via one of the fixing devices (42; 52) and a belt (12) is held on the other fixing device (42; 52), a transmitter-sensor device (102) which is arranged in the housing (26) and by means of which the relative position of the plate (50; 128) to the housing (26) is determinable, and a spring device via which the plate (50; 128) is supported on the housing (26) and which provides a return force,
**characterized in that** the spring device is formed by a flexural spring device (88; 124), **in that** the transmitter (116) is integrated in the plate (50; 128), wherein the transmitter (116) is arranged in a recess (120) of the plate (50; 128) and the plate (50; 128) has a top side (78) and a bottom side (76), the bottom side (76) facing towards the sensor (108) and the transmitter (116) not protruding beyond the top side (78), **in that** the transmitter (116) in the recess (120) is a magnet (118) and is surrounded by a magnetically insulating enclosure (122) and **in that** the first fixing device (42) comprises an opening (47) in the housing (26) through which a fastening element (48) is adapted to extend, wherein the plate (50; 128) has a corresponding opening (62) having a length in the direction of displacement (64) that is larger than that of the opening (47) in the housing (26).

2. Belt holder device in accordance with claim 1, **characterized in that** the flexural spring device (88; 124) has a middle region (92), a first wing (94) and a second wing (96), wherein each of the first wing (94) and the second wing (96) are arranged at and are elastically bendable with respect to the middle region (92).

3. Belt holder device in accordance with claim 1 or 2, **characterized in that** the flexural spring device (88; 124) is supported via its middle region (92) on one of the housing (26) and the plate (50; 128) and the first wing (94) and the second wing (96) are supported on the other of the housing and the plate (128; 50; 26).

4. Belt holder device in accordance with any one of the preceding claims, **characterized in that** the flexural spring device (124) is made of a plastics material which is in particular fibre-reinforced.

5. Belt holder device in accordance with claim 4, **characterized in that** the flexural spring device (124) is integrally formed, and is in particular integrally formed in one piece, on the housing (26).

6. Belt holder device in accordance with any one of the preceding claims, **characterized in that** at least one pin element (130) for supporting the flexural spring device (88) is arranged at the plate (128).

7. Belt holder device in accordance with any one of claims 1 to 5, **characterized in that** the plate (50) has a recess (82), wherein the flexural spring device (88; 124) is supported on a wall (86) delimiting the recess (82).

8. Belt holder device in accordance with any one of the preceding claims, **characterized in that** the housing (26) has a web (84) or a wall on which the flexural spring device (88; 124) is supported.

9. Belt holder device in accordance with claim 8, **characterized in that** the web (84) extends into a recess (82) of the plate (50).

10. Belt holder device in accordance with any one of the preceding claims, **characterized in that** the housing (26) has a lower housing part (28) and an upper housing part (34).

11. Belt holder device in accordance with claim 10, **characterized in that** slide rails (100) for the plate (50; 128) are integrally formed, and are in particular integrally formed in one piece, on the lower housing part (28) and/or the upper housing part (34).

12. Belt holder device in accordance with any one of the preceding claims, **characterized in that** the transmitter (116) is a magnet (118) and has a cylindrical or cube-shaped configuration.

13. Belt holder device in accordance with any one of the preceding claims, **characterized in that** the transmitter (116) does not protrude beyond the bottom side (76).

14. Belt holder device in accordance with any one of the preceding claims, **characterized in that** the fastening element (48) which is adapted to extend through the opening (47) in the housing (26) has a first area (68) adapted to be positioned in the opening (47) of the housing (26) and a second area (70) provided with a thread (72), wherein the first area (68) has a larger cross-section than the second area (70).

## Revendications

1. Agencement de fixation pour ceinture, comprenant un boîtier (26) avec un premier système de fixation (42), une plaque (50; 128) avec un deuxième système de fixation (52), qui est montée sur le boîtier (26) de façon coulissante dans une direction de coulissement (64), l'agencement de fixation pour ceinture étant tenu à une application (14) par un des systèmes de fixation (42; 52) et une ceinture (12) étant tenue à l'autre système de fixation (42; 52), un dispositif de capteur-émetteur (102), qui est disposé dans le boîtier (26) et au moyen duquel la position relative de la plaque (50; 128) par rapport au boîtier (26) peut être déterminée, et un système de ressort, par lequel la plaque (50; 128) s'appuie sur le boîtier (26) et qui produit une force de rappel, **caractérisé en ce que** le système de ressort est formé par un système de ressort de flexion (88; 124), **en ce que** l'émetteur (116) est intégré dans la plaque (50; 128), dans lequel l'émetteur (116) est disposé dans un évidement (120) de la plaque (50; 128) et la plaque (50; 128) présente un côté supérieur (78) et un côté inférieur (76), dans lequel le côté inférieur (76) est tourné vers le capteur (108) et l'émetteur (116) ne sort pas au-delà du côté supérieur (78), **en ce que** l'émetteur (116) dans l'évidement (120) est un aimant (118) et est entouré par une gaine magnétiquement isolante (122), et **en ce que** le premier système de fixation (42) comprend une ouverture (47) dans le boîtier (26), par laquelle un élément de fixation (48) peut être introduit, la plaque (50; 128) présentant une ouverture correspondante (62), qui présente une plus grande longueur dans la direction de coulissement (64) que l'ouverture (47) dans le boîtier (26).

2. Agencement de fixation pour ceinture selon la revendication 1, **caractérisé en ce que** le système de ressort de flexion (88; 124) présente une zone centrale (92), une première aile (94) et une deuxième aile (96), dans lequel la première aile (94) et la deuxième aile (96) sont agencées respectivement sur la zone centrale (92) et sont élastiquement flexibles par rapport à celle-ci.

3. Agencement de fixation pour ceinture selon la revendication 1 ou 2, **caractérisé en ce que** le système de ressort de flexion (88; 124) prend appui par sa zone centrale (92) sur un des éléments boîtier (26) ou plaque (50; 128) et la première aile (94) et la deuxième aile (96) prennent appui sur l'autre élément (128; 50; 26).

4. Agencement de fixation pour ceinture selon l'une quelconque des revendications précédentes, **caractérisé en ce que** le système de ressort de flexion (124) est fabriqué en un matériau plastique, qui est renforcé en particulier par des fibres.

5. Agencement de fixation pour ceinture selon la revendication 4, **caractérisé en ce que** le système de ressort de flexion (124) est façonné sur le boîtier (26) et en particulier est façonné en une seule pièce.

6. Agencement de fixation pour ceinture selon l'une quelconque des revendications précédentes, **caractérisé en ce qu'**au moins un élément de tige (130) est disposé sur la plaque (128) pour l'appui du système de ressort de flexion (88).

7. Agencement de fixation pour ceinture selon l'une quelconque des revendications 1 à 5, **caractérisé en ce que** la plaque (50) présente un évidement (82), le système de ressort de flexion (88; 124) prenant appui sur une paroi (86) délimitant l'évidement (82).

8. Agencement de fixation pour ceinture selon l'une quelconque des revendications précédentes, **caractérisé en ce que** le boîtier (26) présente une nervure (84) ou une paroi, sur laquelle s'appuie le système de ressort de flexion (88; 124).

9. Agencement de fixation pour ceinture selon la revendication 8, **caractérisé en ce que** la nervure (84) est plongée dans un évidement (82) de la plaque (50).

10. Agencement de fixation pour ceinture selon l'une quelconque des revendications précédentes, **caractérisé en ce que** le boîtier (26) présente une partie de boîtier inférieure (28) et une partie de boîtier supérieure (34).

11. Agencement de fixation pour ceinture selon la revendication 10, **caractérisé en ce que** des rails de glissement (100) pour la plaque (50; 128) sont façonnés sur la partie de boîtier inférieure (28) et/ou la partie de boîtier supérieure (34), et sont en particulier façonnés d'une seule pièce.

12. Agencement de fixation pour ceinture selon l'une quelconque des revendications précédentes, **caractérisé en ce que** l'émetteur (116) est un aimant (118) et présente une forme cylindrique ou parallélépipédique.

13. Agencement de fixation pour ceinture selon l'une quelconque des revendications précédentes, **caractérisé en ce que** l'émetteur (116) ne sort pas au-delà du côté inférieur (76).

14. Agencement de fixation pour ceinture selon l'une quelconque des revendications précédentes, **caractérisé en ce que** l'élément de fixation (48), qui peut être introduit par l'ouverture (47) dans le boîtier (26), présente une première zone (68) pour le positionnement dans l'ouverture (47) du boîtier (26) et une deuxième zone (70) avec un filet (72), la première zone (68) présentant une plus grande section transversale que la deuxième zone (70).
